(19) Europäisches Patentamt
European Patent Office
Office européen des brevets

(11) Veröffentlichungsnummer: **0 132 757**
**B1**

(12) # EUROPÄISCHE PATENTSCHRIFT

(45) Veröffentlichungstag der Patentschrift: **24.09.86**

(51) Int. Cl.⁴: **C 07 C 103/82,** C 07 C 103/42, C 07 C 102/06, C 07 D 221/18

(21) Anmeldenummer: **84108393.4**

(22) Anmeldetag: **17.07.84**

(54) **Verfahren zur Herstellung von Oxamiden.**

(30) Priorität: **30.07.83 DE 3327644**

(43) Veröffentlichungstag der Anmeldung: **13.02.85 Patentblatt 85/7**

(45) Bekanntmachung des Hinweises auf die Patenterteilung: **24.09.86 Patentblatt 86/39**

(84) Benannte Vertragsstaaten: **CH DE FR GB LI**

(56) Entgegenhaltungen: **DE-C-270 579** **US-A-1 616 109**

(73) Patentinhaber: **BAYER AG, Konzernverwaltung RP Patentabteilung, D-5090 Leverkusen 1 Bayerwerk (DE)**

(72) Erfinder: **Stawitz, Josef, Dr., Gerstenkamp 21, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 132 757 B1

LIBER, STOCKHOLM 1986

**Beschreibung**

Die Erfindung betrifft ein Verfahren zur Herstellung von Oxamiden durch Umsetzung von Aminoanthrachinonen oder Aminen kondensierter Anthrachinone mit Oxalsaureestern.

Stark basische Amine lassen sich bekanntlich leicht mit Oxalsäureestern zu den entsprechenden Oxamiden kondensieren (F. Möller in Houben-Weyl, Bd. 11/2, S. 21, 4. Auflage, 1958).

Die sehr schwach basischen Aminoanthrachinone ($pK_A \leqslant 1$) werden üblicherweise mit Oxalylchlorid in inerten organischen Lösungsmitteln zu den entsprechenden Dianthrachinonyloxamiden umgesetzt.

Das benötigte Oxalylchlorid läßt sich aus wasserfreier Oxalsäure und $PCl_5$ und anschließende Destillation erhalten.

Bekanntlich ist Oxalylchlorid eine aggressive Flüssigkeit, die in der Technik hinsichtlich Herstellung, Lagerung, Transport und Weiterverarbeitung spezielle Gefäßmaterialien sowie einen hohen Sicherheitsaufwand erfordert.

Nach der DE-PS 224 808 lassen sich Aminoanthrachinone mit Oxalsäure zu Oxamidsäuren verschmelzen und anschließend mit weiterem Aminoanthrachinon in Gegenwart von $PCl_5$ zu Dianthrachinonyloxamiden umsetzen. Dieses aufwendige Zweistufenverfahren liefert insbesondere bei Einsatz substituierter Aminoanthrachinone Produkte in deutlich geringerer Ausbeute und Reinheit als das Oxalylchloridverfahren.

Die DE-PS 270 579 beschreibt Umsetzungen von Oxalsäureestern mit Aminoanthrachinonen in Alkohol in Gegenwart von molaren Mengen Alkoholat. Nach Aussagen des Patents sind die entstehenden Produkte nicht die erwarteten Dianthrachinonyloxamide. Die Nacharbeitung mit Aminobenzoylaminoanthrachinon ergab, daß weitgehende Verseifung der Benzoylamino-Gruppe und, wenn überhaupt, nur geringe Umsetzung im gewüschten Sinne eintritt.

Das erfindungsgemäße Verfahren zur Herstellung von Oxamiden durch Umsetzung von Oxalsäureestern mit Aminoanthrachinonen oder Aminen von kondensierten Anthrachinonen ist dadurch gekennzeichnet, daß man in Gegenwert eines sekundären oder tertiaren Amins, die stärker basisch sind als das Aminoenthrachinon bzw. als das Amin des kondensierten Anthrachinons, als Katalysator arbeitet. Bevorzugt verwendet man stark basische Amine als Katalysator.

Vorzugsweise arbeitet man bei Temperaturen von etwa 100-220°C, besonders bevorzugt bei 140-200°C.

Weiterhin ist es in den meisten Fällen vorteilhaft, die Umsetzung in Gegenwart eines Verdünnungsmittels durchzuführen.

Als Oxalsäureester werden vorzugsweise die Dialkylester wie Oxalsäuredi-n-propylester, Oxalsüuredi-i-propylester, Oxalsäuredi-n-butylester, Oxalsäuredi-i-butylester, besonders bevorzugt Oxalsäurediethylester und Oxalsäuredimethylester eingesetzt.

Bevorzugt werden Aminoanthrachinone der Formel

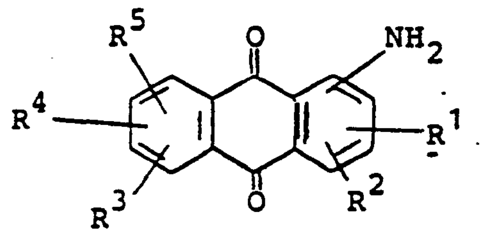

in der

$R^1$, $R^2$, $R^3$, $R^4$, $R^5$ Wasserstoff, Halogen, Nitro, Cyan, Aryloxy, Acyl, Arylamino, Alkylamino, Acylamino, Arylthio, Alkyl und Alkoxy bezeichnen, eingesetzt. Die in diesen Substituenten auftretenden Alkylrest haben vorzugsweise 1-6 C-Atome, bei den Arylresten handelt es sich vorzugsweise um Phenyl-, Naphthyl- oder Anthrachinonylreste, die z.B. durch Trifluormethyl, $C_1$-$C_6$-Alkyl, $C_1$-$C_6$-Alkoxy, Nitro, Chlor, Brom und Fluor weitersubstituiert sein können; Acyl steht bevorzugt für $C_1$-$C_6$-Alkylcarbonyl und Arylcarbonyl, ganz besonders bevorzugt für Benzoyl, wobei die Arylreste z.B. durch Trifluormethyl, $C_1$-$C_6$-Alkyl, $C_1$-$C_6$-Alkoxy, Nitro, Halogen weiter substituiert sein können. Halogen steht bevorzugt für Chlor, Brom und Fluor.

Weiterhin lassen sich z.B. Aminophthaloylacridone, Aminoanthrapyridine, Aminoanthrapyrimidine, Aminothiazolanthrone, Aminopyrazolanthrone, Aminobenzanthrone u.a. kondensierte Anthrachinonabkömmlinge erfindungsgemäß mit Oxalsäureestern umsetzen.

Individuelle Beispiele für Ausgangsamine sind:

1-Aminoanthrachinon, 1-Amino-4-benzoylaminoanthrachinon, 1-Amino-4-methoxyanthrachinon, 1-Amino-4-acetylaminoanthrachinon, 1-Amino-4-(p-toluolsulfonylamino)anthrachinon, 1-Amino-4-phenylthioanthrachinon, 1-Amino-4-nitroanthrachinon sowie die entsprechenden 1-Aminoanthrachinone, die statt in 4-Stellung in 5- oder 8-Stellung substituiert sind, z.B. 1-Amino-5-benzoylaminoanthrachinon, 1-Amino-2-ethylanthrachinon, 1-Amino-6(7)-chloranthrachinon, 1-Amino-6(7)-phenylthioanthrachinon, 2-Aminoanthrachinon, 1-Amino-6(7)-benzoylaminoanthrachinon, 2-Amino-3,4-phthaloyl-acridon, 8-Amino-5-brom-3,4-phthaloylacridon, 2-Amino-6-trifluormethyl-3,4-phthaloylactidon, Aminoanthanthron, 5-Aminoisothiazolanthron, 1-Aminobenzanthron, 2-Amino-1,9-pyrimidinoanthron, 4-Amino-1,9-pyrimidinoanthron, 4-Amino-1,9-thiazolanthron, 4-Amino-1, -dianthrimid oder sein Carbazol.

Als Katalysatoren können in das erfindungsgemäße Verfahren die verschiedenartigsten sekundären und tertiären

Amine eingesetzt werden.

Beispielhaft seien genannt:

Sekundäre und tertiäre Amine der Formel

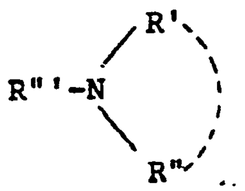

in der

R', R'', R'' Wasserstoff, $C_1$-$C_6$-Alkyl, $C_1$-$C_6$-Hydroxyalkyl, $C_1$-$C_6$-Alkoxy-$C_1$-$C_6$-alkyl, Aralkyl, insbesondere Phenyl-$C_1$-$C_6$-alkyl, Aryl, insbesondere Phenyl und Naphthyl, Heteroaryl bezeichnen können oder R', R'' zusammen einen $C_2$-$C_6$-Alkylidenrest bilden können.

Weiterhin können als Katalysatoren heteroaromatische Amine wie Pyridin, Picoline, Chinolin, Methylchinoline und Imidazol allein oder in Mischung eingesetzt werden.

Folgende individuelle Amine seien beispielhaft genannt: Dimethylamin, Diethylamin, Dipropylamin, Dibutylamin, Ethylpropylamin, Diethanolamin, Bis-(methoxypropyl)-amin, Di-i-propanolamin, Dibenzylamin, Methylbenzylamin, Piperidin, Trimethylamin, Triethylamin, Tripropylamin, Tributylamin, Triethanolamin, Tris-(methoxyethyl)-amin, N,N-Dimethylbenzylamin, N,N-Dimethylphenylamin, N-Methylpiperidin, N-Methylmorpholin, 1,8-Diazabicyclo-[5.4,0]undec-7-en (DBU), 1,5-Diazabicyclo [4.3.0]non-5-en (DBN), 1,4-Diazabicyclo /2.2.2/octan (DABCO), 4-N,N-Dimethylaminopyridin, Chinuklidin.

Bevorzugt werden als Katalysatoren tertiäre Amine, insbesondere Triethylamin, Tributylamin und 1,4-Diazabicyclo [2.2.0]octan eingesetzt.

Als Verdünnungsmittel für das erfindungsgemäße Verfahren kommen insbesondere solche in Frage, die unter den Reaktionsbedingungen inert sind und die Reaktionspartner in hinreichender Menge lösen. Bevorzugt sind aromatische und hydroaromatische Kohlenwasserstoffe, die beispielsweise durch Halogen-, Nitro- oder Alkylgruppen substituiert sein können, sowie Amide und Sulfone.

Geeignete aromatische und hydroaromatische Kohlenwasserstoffe, die auch als Mischung eingesetzt werden können, sind beispielsweise: Toluol, Xylole, Trimethylbenzole, Tetramethylbenzole, Isopropylbenzol;-Isododecylbenzol, Dibenzyl, Diphenylmethan, Diphenyl, Diphenylether, 1,1-Diphenylethan, Dimethyldiphenyle, Tetralin, Dekalin, Naphthalin, Methylnaphthaline, Dimethylnaphthaline, Trimethylnaphthaline, Chlorbenzol, Dichlorbenzole, Trichlorbenzole, Chlortoluole, Chlornaphthaline, Dichlornaphthaline, Nitrobenzol, Sulfolan, Diphenylsulfon, N-Methylpyrrolidon.

Bevorzugt werden hochsiedende Lösungsmittel, ganz besonders bevorzugt Mitrobenzol und 1,2-Dichlorbenzol verwendet.

Das Molverhältnis von Aminoanthrachinon oder Amin des kondensierten Anthrachinons zu Oxalsäureester beträgt vorzugsweise 2,0:1 bis 1,1:1, ganz besonders bevorzugt 1,8:1 bis 1,3:1.

Das Verdünnungsmittel wird vorzugsweise in einer Menge von 0,5 bis 10 Gew.-Tln bezogen auf das umzusetzende Amin eingesetzt. Die Menge richtet sich nach der gewählten Verfahrensweise, z.B. werden bei der Durchführung in einen Schaufeltrockner nach Art einer Backschmelze nur Mengen von 0,5 bis 3 Gew.-Teilen benötigt.

Bei der Aufarbeitung kann das Lösungsmittel z.B. durch Abdestillieren, gegebenenfalls unter vermindertem Druck oder durch Filtration, gegebenenfalls nach weiterer Verdünnung mit einem geeigneten Lösungsmittel, welches so gewählt wird, daß es leicht durch fraktionierte Destillation wiedergewonnen werden kann, abgetrennt werden.

Das Katalysatoramin wird vorzugsweise in einer Menge von 0,5 bis 10 Gew.-%, besonders bevorzugt 1 bis 5 Gew.-%," bezogen auf das Gewicht des eingesetzten Oxalsäureesters, zugesetzt.

Die Reaktionszeit richtet sich nach der gewählten Reaktionstemperatur, nach der Reaktivität der umzusetzenden Aminoverbindung und des eingesetzten Oxalsäureesters und liegt im allgemeinen zwischen 0,5 und ca. 20 Stunden. Bei Einsatz von Aminoanthrachinonen und Oxalsäuredimethylester ist in den meistan Fällen in 0,5 bis 4 Stunden bei 150-160°C vollständiger Umsatz zu erreichen.

Die umzusetzende Aminoverbindung und der Oxalsäureester können bei Raumtemperatur oder bei höherer Temperatur in das Lösungsmittel gemeinsam eingetragen und anschließend auf Reaktionstemperatur gebracht werden. Ohne Nachteil kann aber auch der Oxalsäureester bei der Reaktionstemperatur gegebenenfalls gelöst im jeweiligen Lösungsmittel der Schmelze zudosiert werden. Der Eintrag bzw. die Dosierung erfolgt z.B. innerhalb von 0,5 bis 4 Stunden. Anschließend wird bei der Reaktionstemperatur gerührt, bis z.B. dünnschichtchromatographisch das Aminoanthrachinon bzw. das Amin des kondensierten Anthrachinons nicht mehr nachzuweisen ist. Bei unzureichenden Umsatz kann auch eine Nachdosierung des Oxalsäureesters erfolgen.

Das katalytisch wirkende sekundäre oder tertiäre Amin wird bereits mit den anderen Einsatzmaterialien zu Anfang oder bei der Reaktionstemperatur zugesetzt.

Das beanspruchte Verfahren führt in einem Einstufenverfahren mit hoher Ausbeute zu Oxamiden, insbesondere Dianthrachinonyloxamiden hervorragender Qualität.

Als Vorzug des neuen Verfahrens ist anzusehen, daß als Ausgangsprodukt die einfach herstell-, lager- und dosierbaren Oxalsäureester, die zudem preisgünstig sind, eingesetzt werden. Außerdem werden bei der sehr schonenden Verfahrensweise säure- oder basenempfindliche

Substituenten nicht verändert.

**Beispiel 1**

In 600 ml trockenes Nitrobenzol trägt man 88,1 g 1-Amino-anthrachinon (98 %ig) und 32,0 g Oxalsäuredimethylester (98 %ig) ein. Nach Zusatz von 2 ml Triethylamin heizt man auf 160° C und hält diese Temperatur 3 Stunden. Das bei der Reaktion entstehende Methanol läßt man über eine Destillationsbrücke abdestillieren. Nach Trocknen i.Vac. bei 120° C erhält man 97,0 g Dianthrachinonyloxamid ca. 96 %ig). Das Produkt färbt aus der Küpe Baumwolle in gelben Tönen.

**Beispiel 2**

Eine Schmelze von 150,0 g 1-Amino-4-benzoylaminoanthrachinon (87 %ig), 23,0 g Oxalsäuredimethylester und 2 g Tributylamin in 800 ml 1,2-Dichlorbenzol erhitzt man 2-3 Stunden auf 160-165° C. Nach Abdestillieren des entstehenden Methanols läßt man bei ca. 160° C eine Lösung von 12,0 g Oxalsäuredimethylester in 50 ml 1,2-Dichlorben-zol innerhalb von 1 Stunde zutropfen und rührt noch 3-4 Stunden nach. Bei 120° C wird abgesaugt, mit 500 ml 1,2-Dichlorbenzol gewaschen und der Nutschkuchen bei 120° C in Vakuum getrocknet. Man isoliert 142,0 g eines dunklen kristallinen Produkts, das Baumwolle aus der Küpe in echten orangen Tönen färbt.

**Beispiel 3**

In 600 ml trockenes 1,2-Dichlorbenzol werden 144 g 1-Amino-5-benzoylaminoanthrachinon (92 %ig) und 32,0 g Oxalsäuredimethylester eingetragen. Nach Zusatz von 1 ml Triethylamin heizt man auf 150-155° C und halt die Temperatur noch 2-3 Stunden, wobei laufend Destillat abgenommen wird. Man rührt noch 1 Stunde bei 160° C nach und dampft dann im Vakuum bis zur Trockne ein. Man erhält 156 g eines orangegelben Pulvers. Der Farbstoff färbt aus der Küpe Baumwolle kräftig gelb.

**Beispiel 4**

In 500 ml trockenes Nitrobenzol werden 144 g 1-Amino-5-benzoylaminoanthrachinon (92 %ig) eingetragen. Nach Heizen auf 200-210° C wird in 1 Std. eine Lösung aus 40 g Oxalsäurediethylester, 1 g 1,4-Diazabicyclo[2.2.2]octan und 30 ml Nitrobenzol zugetropft. Entstehendes Ethanol wird über eine kurze Kolonne abdestilliert. Nach 1 Stunde Rühren bei 200° C und Eindampfen im Vakuum erhält man den gleichen Farbstoff wie in Beispiel 3 in gleicher Ausbeute.

**Beispiel 5**

In 500 ml trockenem 1,2-Dichlorbenzol werden 85 g 2-Amino-7-brom-3,4-phthaloylacriden (97 %ig), 16 g Oxalsäuredimethylester und 2 g Triethylamin 5 Stunden auf 160-170° C erhitzt. Nach Eindampfen im Vakuum erhält man 93 g eines dunkelblauen Pulvers, das Baumwolle aus der Küpe in echten blaugrauen Tönen färbt.

**Beispiel 6**

In 600 ml trockenes Nitrobenzol werden 144 g 1-Amino-5-benzoylaminoanthrachinon (92 %ig), 49 g Oxalsäurediisobutylester und 2 g 1,4-Diazabicyclo [2.2.2]octan eingetragen. Die Schmelze wird in 2 Stunden auf 200-205° C erhitzt und 2 Stunden bei dieser Temperatur gehalten. Nach Abkühlen auf 140° C wird abgesaugt, mit warmen Nitrobenzol gewaschen und der Nutschkuchen i.vac. getrocknet. Erhalten werden 142 g Farbstoff, der dem des Beispiels 3 sehr ähnlich ist.

**Patentansprüche**

1. Verfahren zur Herstellung von Oxamiden durch Umsetzung von Oxalsäureestern mit Aminoanthrachinonen oder den Aminen kondensierter Antrhachinone, dadurch gekennzeichnet, daß man in Gegenwart eines sekundären oder tertiären Amins, das stärker basisch ist als das Aminoanthrachinon bzw. das Amin des kondensierten Anthrachinons, als Katalysator arbeitet.

2. Verfahren gemäß Anspruch 1, dadurch gekennzeichnet, daß man bei etwa 100-220° C arbeitet.

3. Verfahren gemäß den Ansprüchen 1-2, dadurch gekennzeichnet, daß man in Gegenwart eines Verdünnungsmittels, vorzugsweise Nitrobenzol oder 1,2-Dichlorbenzol, arbeitet.

4. Verfahren gemäß den Ansprüchen 1-3, dadurch gekennzeichnet, daß man als Oxalsäureester Oxalsäurediethylester oder Oxalsäuredimethylester einsetzt.

5. Verfahren gemäß den Ansprüchen 1-4, dadurch gekennzeichnet, daß man Aminoanthrachinone der Formel

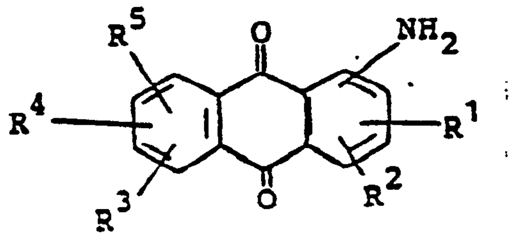

in der
R¹, R², R³, R⁴, R⁵ Wasserstoff, Halogen, Nitro, Cyan, Aryloxy, Acyl, Arylamino, Arylthio, Alkylamino, Acyamino, Alkyl und Alkoxy bezeichnen, und Aminophthaloylacridone, Aminoanthrapyridine, Aminoanthrapyimidine oder andere kondensierte Anthrachinonabkömmlinge einsetzt.

6. Verfahren gemäß den Ansprüchen 1-4, dadurch gekennzeichnet, daß man als Ausgangsamine 1-Amino-4-benzoylamino-anthrachinon, 1-Amino-5-benzoylamino-anthrachinon, 1-Amino-8-benzylaminoanthrachinon oder 2-Amino-7-brom-3,4-phthaloylacridon einsetzt.

7. Verfahren gemäß den Ansprüchen 1-6, dadurch gekennzeichnet, daß man als Katalysator ein teritäres Amin einsetzt.

8. Verfahren gemäß den Ansprüchen 1-6, dadurch gekennzeichnet, daß man als Katalysator Triethylamin oder Tributylamin einsetzt.

9. Verfahren qemäß den Ansprüchen 1-6, dadurch gekennzeichnet, daß man als Katalysator 1,4-Diazabicyclo[2.2.2]octan einsetzt.

## Claims

1. Process for the preparation of oxamides by reacting oxalic acid esters with aminoanthraquinones or the amines of condensed anthraquinones, characterised in that it is carried out in the presence of a secondary or tertiary amine which is more strongly basic that the aminoanthraquinone or the amine of the condensed anthraquinone, as the catalyst.

2. Process according to Claim 1, characterised in that it is carried out at about 100-220° C.

3. Process according to Claims 1-2, characterised in that it is carried out in the precence of a diluent, preferably nitrobenzene or 1,2-dichlorobenzene.

4. Process according to Claims 1-3, characterised in that oxialic acid diethyl ester or oxalic acid dimethyl estar is used as the oxalic acid ester.

5. Process according to Claims 1-4, characterised in that aminoanthraquinones of the formula

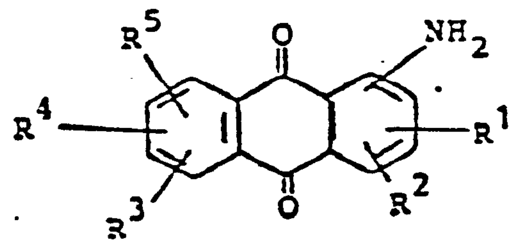

in which
R¹, R², R³, R⁴ and R⁵ designate hydrogen, halogen, nitro, cyano, aryloxy, acyl, arylamino, arylthio, alkylamino, acylamino, alkyl and alkoxy, and aminophthaloyl acridones, aminoanthrapyridines, aminoanthrapyrimidines or other condensed anthraquinone derivatives are used.

6. Process according to Claims 1-4, characterised in that 1-amino-4-benzoylaminoanthraquinone, 1-amino-5-benzoylaminoanthraquinone, 1-amino-3-benzylaminoanthraquinone or 2-amino-7-bromo-3,4-phthaloyl acridone are used as the starting amines.

7. Process according to Claims 1-4, characterised in that a tertiary amine is used as the catalyst.

8. Process according to Claims 1-6, characterised in that triethylamine or tributylamine are used as the catalyst.

9. Process according to Claims 1-6, charactarised in that 1,4-diazabicyclo[2.2.2]octane is used as the catalyst.

## Revendications

1. Procédé de préparation d'oxamides par réaction d'esters oxaliques avec des aminoanthraquinones ou les amines d'anthraquinones, condensées, caractérisé en ce que l'on opère en présence d'une amine secondaire ou tertiaire plus fortement basique que l'aminoanthraquinone ou l'amine d'anthraquinone condensée et qui sert de catalyseur.

2. Procédé selon la revendication 1, caractérisé en ce que l'on opère à des températures d'environ 100 à 220° C.

3. Procédé selon les revendications 1 et 2, caractérisé en ce que l'on opère en présence d'un diluant, de préférence le nitrobenzène ou le 1,2-dichlorobenzène.

4. Procédé selon les revendications 1 à 3, caractérisé en ce que l'on utilise en tant qu'ester oxalique l'oxalate de diéthyle ou l'oxalate de diméthyle.

5. Procédé selon les rcvendications 1 à 4, caractérisé en ce que l'on utilise des aminoanthraquinones de formule

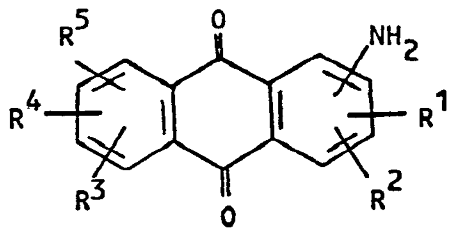

dans laquelle
$R^1$, $R^2$, $R^3$, $R^4$, $R^5$ représentent hydrogène, des halogènes, des groupes nitro, cyano, aryloxy, acyle, arylamino, arylthio, alkylamino, acylamino, alkyle et alcoxy, et des aminophtaloylacridones, des aminoanthrapyridines, des aminoanthrapyrimidines, ou d'autres dérivés condensés d'anthraquinones.

6. Procédé selon les revendications 1 à 4, caractérisé en ce que l'on utilise en tant qu'amines de départ la 1-amino-4-benzoylaminoanthraquinone, la 1-amino-5-benzoylaminoantraquinone, la 1-amino-8-benzylaminoanthraquinone ou la 2-amino-7-bromo-3,4-phthaloylacridone.

7. Procédé selon les revendications 1 à 6, caractérisé en ce que l'on utilise en tant que catalyseur une amine tertiaire.

8. Procédé selon les revendications 1 a 6, caractérisé en ce que l'on utilise en tant que catalyseur la triéthylamine ou la tributylamine.

9. Procédé selon les revendications 1 à 6, caractérisé en ce que l'on utilise en tant que catalyseur le 1,4-diazabicyclo-[2.2.2]octane.